(19) Europäisches Patentamt
European Patent Office
Office européen des brevets

(11) **EP 4 231 231 B1**

(12) **EUROPEAN PATENT SPECIFICATION**

(45) Date of publication and mention
of the grant of the patent:
**01.01.2025 Bulletin 2025/01**

(21) Application number: **22822837.5**

(22) Date of filing: **11.11.2022**

(51) International Patent Classification (IPC):
*G06T 7/00* (2017.01)   *G06T 7/13* (2017.01)
*B23K 31/12* (2006.01)   *B23K 9/095* (2006.01)
*B23K 26/03* (2006.01)

(52) Cooperative Patent Classification (CPC):
**G06T 7/001; B23K 9/0956; B23K 26/032;**
**B23K 31/125; G06T 7/13;** G06T 2207/30136;
G06T 2207/30152; Y02P 90/30

(86) International application number:
**PCT/CN2022/131435**

(87) International publication number:
**WO 2023/124579 (06.07.2023 Gazette 2023/27)**

(54) **METHOD AND APPARATUS FOR DETERMINING WELD SEAM QUALITY INSPECTION AREA, COMPUTER, AND STORAGE MEDIUM**

VERFAHREN UND VORRICHTUNG ZUR BESTIMMUNG DES SCHWEISSNAHTQUALITÄTSPRÜFBEREICHS, COMPUTER UND SPEICHERMEDIUM

PROCÉDÉ ET APPAREIL POUR LA DÉTERMINATION D'UNE ZONE D'INSPECTION DE QUALITÉ DE CORDON DE SOUDURE, ORDINATEUR ET SUPPORT DE STOCKAGE

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**

(30) Priority: **29.12.2021 CN 202111645358**

(43) Date of publication of application:
**23.08.2023 Bulletin 2023/34**

(73) Proprietor: **Guangdong Lyric Robot Automation Co., Ltd.**
**Huicheng District**
**Huizhou**
**Guangdong 516000 (CN)**

(72) Inventors:
• **FU, Hanhui**
**Huizhou, Guangdong 516000 (CN)**
• **YUAN, Jiguang**
**Huizhou, Guangdong 516000 (CN)**

(74) Representative: **Purdylucey Intellectual Property**
**6-7 Harcourt Terrace**
**D02 FH73 Dublin 2 (IE)**

(56) References cited:
EP-A1- 3 883 716        EP-B1- 3 883 716
WO-A1-2010/087433       WO-A1-2021/108885
CN-A- 105 938 620       CN-A- 108 274 095
CN-A- 112 053 376       CN-A- 112 258 521
CN-A- 112 258 521

**Description**

**TECHNICAL FIELD**

Embodiments of the disclosure relate to, but are not limited to, the field of image identification, and particularly relates to a method and device for determining a welding seam quality detection region, a computer and a storage medium.

**BACKGROUND**

During welding process of a welding robot, the welding torch may deviate from a welding seam due to influences of environmental factors such as strong arc light radiation, high temperature, fume, splashing, a groove condition, machining error, clamping accuracy of a fixture, surface condition and thermal deformation of a workpiece. Welding seam defect will reduce a stress area of a welding seam and cause stress concentration at the defect, which adversely affects the strength, the impact toughness and the cold bending performance of connection, and may seriously affect the quality of products. Therefore, welding quality detection is performed during welding, so as to ensure the construction quality and adjust optimum construction parameters, which is of great significance to ensure a rate of finished products and save costs. However, it is difficult to determine a welding seam region by commonly used automatic detection methods at present due to welding fume generated in welding of a target workpiece, leading to easy occurrence of identification errors, reducing the accuracy of welding seam quality detection results, and thus the rate of finished products. CN 112 258 521 A, WO 2021/108885 A1 and EP 3 883 716 A1 disclose some examples of welding seam quality detection region determination.

**SUMMARY**

The following is a summary of the subject matter described in detail herein. The summary is not intended to limit the scope of protection of the claims.
Embodiments of the disclosure mainly aim to provide a method and device for determining a welding seam quality detection region, a computer and a storage medium, which can improve accuracy of welding seam quality detection result.
In a first aspect, embodiments of the disclosure provide a method for determining a welding seam quality detection region, comprising:

acquiring a two-dimensional welding image and a three-dimensional welding image of a target workpiece that has been welded;

performing welding fume judgment on the two-dimensional welding image to obtain a welding fume judgment result;

performing an identification process on the two-dimensional welding image according to the welding fume judgment result to obtain a welding seam edge image;

performing a calibration process on the two-dimensional welding image and the three-dimensional welding image to obtain a mapping relation matrix;

mapping the welding seam edge image of the two-dimensional welding image to the three-dimensional welding image according to the mapping relation matrix to obtain a three-dimensional composite image;

performing an identification process on the three-dimensional composite image to obtain a welding seam target datum line;

performing an offset comparison process on the welding seam edge image and the welding seam target datum line to obtain an offset comparison result; and

in response to the offset comparison result being consistent with a preset threshold range, determining the welding seam edge image as the welding seam quality detection region.

In an embodiment, the performing welding fume judgment on the two-dimensional welding image to obtain a welding fume judgment result comprises:

acquiring a minimum enclosing graph of a welding seam region in the two-dimensional welding image by using an edge identification tool;

judging whether welding fume exists in the two-dimensional welding image according to an edge line parameter of the minimum enclosing graph; and

in response to the edge line parameter being greater than a threshold, determining the welding fume judgment result as existence of the welding fume, or in response to the edge line parameter being smaller than the threshold, determining the welding fume judgment result as non-existence of the welding fume.

In an embodiment, the performing an identification process on the two-dimensional welding image according to the welding fume judgment result to obtain a welding seam edge image comprises:

in response to the welding fume judgment result indicating existence of the welding fume, performing a welding fume elimination process on the two-dimensional welding image to obtain the welding seam edge image; or

in response to the welding fume judgment result indicating non-existence of the welding fume, performing a searching process on the two-dimensional welding image through the edge identification tool to obtain the welding seam edge image.

In an embodiment, the performing a welding fume elimination process on the two-dimensional welding image to obtain the welding seam edge image comprises:

performing a histogram equalization process on the two-dimensional welding image to obtain the two-dimensional welding image subjected to the equalization process;

performing a quantization process on the two-dimensional welding image subjected to the equalization process to obtain a welding fume region and the welding seam region; and

performing a searching process on the welding seam region through the edge identification tool to obtain the welding seam edge image.

In an embodiment, the performing an identification process on the three-dimensional composite image to obtain a welding seam target datum line comprises:

performing an identification process on the three-dimensional composite image to obtain a first region and a second region welded with the first region; and

performing a fitting process according to the first region and the second region to obtain the welding seam target datum line.

In an embodiment, the performing an identification process on the three-dimensional composite image to obtain a first region and a second region welded with the first region comprises:

acquiring height data of the three-dimensional composite image; and

performing an identification process on the three-dimensional composite image according to the height data to obtain the first region and the second region welded with the first region, wherein a height value of the first region is different from a height value of the second region.

In an embodiment, the performing a fitting process according to the first region and the second region to obtain the welding seam target datum line comprises:

acquiring a height value of the first region and a height value of the second region;

performing a first-order derivation process on the height value of the first region and the height value of the second region to obtain at least two edge points between the first region and the second region; and

performing the fitting process on the at least two edge points by using a welding seam target datum line tool to obtain the welding seam target datum line.

In an embodiment, the performing an offset comparison process on the welding seam edge image and the welding seam target datum line to obtain an offset comparison result comprises:

calculating an offset of a boundary of the welding seam edge image relative to the welding seam target datum line; and

comparing the offset with the preset threshold range to obtain the offset comparison result.

In an embodiment, the performing a calibration process on the two-dimensional welding image and the three-dimensional welding image to obtain a mapping relation matrix comprises:

performing the calibration process on the two-dimensional welding image and the three-dimensional welding image to obtain a plurality of corner point coordinates of the two-dimensional welding image and a plurality of corner point coordinates of the three-dimensional welding image; and

performing a transformation matrix calculation process according to the plurality of corner point coordinates of the two-dimensional welding image and the plurality of corner point coordinates of the three-dimensional welding image to obtain the mapping relation matrix.

In a second aspect, embodiments of the disclosure provide a device for determining a welding seam quality detection region, comprising:

an acquisition module configured for acquiring a two-dimensional welding image and a three-dimensional welding image of a target workpiece that has been welded;

a judgment module configured for performing welding fume judgment on the two-dimensional welding image to obtain a welding fume judgment result;

an identification module configured for performing an identification process on the two-dimensional welding image according to the welding fume judgment result to obtain a welding seam edge image;

a calibration module configured for performing a calibration process on the two-dimensional welding image and the three-dimensional welding image to obtain a mapping relation matrix;

a mapping module configured for mapping the welding seam edge image of the two-dimensional welding image to the three-dimensional welding image according to the mapping relation matrix to obtain a three-dimensional composite image;

a fitting module configured for performing an identification process on the three-dimensional composite image to obtain a welding seam target datum line;

a comparison module configured for performing an offset comparison process on the welding seam edge image and the welding seam target datum line to obtain an offset comparison result; and

a determination module configured for, in response to the offset comparison result being consistent with a preset threshold range, determining the welding seam edge image as the welding seam quality detection region.

In a third aspect, embodiments of the disclosure provide a computer, which comprises a memory, a processor, and a computer program stored on the memory and executable on the processor, wherein the computer program, when executed by the processor, implements the method for determining a welding seam quality detection region in the first aspect.

In a fourth aspect, a computer-readable storage medium stores a computer-executable instruction, wherein the computer-executable instruction is used for executing the method for determining a welding seam quality detection region in the first aspect.

Embodiments of the disclosure provide a method for determining the welding seam quality detection region, which comprises: acquiring a two-dimensional welding image and a three-dimensional welding image of a target workpiece that has been welded; performing welding fume judgment on the two-dimensional welding image to obtain a welding fume judgment result; performing an identification process on the two-dimensional welding image according to the welding fume judgment result to obtain a welding seam edge image; performing a calibration process on the two-dimensional welding image and the three-dimensional welding image to obtain a mapping relation matrix; mapping the welding seam edge image of the two-dimensional welding image to the three-dimensional welding image according to the mapping relation matrix to obtain a three-dimensional composite image; performing an identification process on the three-dimensional composite image to obtain a welding seam target datum line; performing an offset comparison process on the welding seam edge image and the welding seam target datum line to obtain an offset comparison result; and in response to the offset comparison result being consistent with a preset threshold range, determining the welding seam edge image as the welding seam quality detection region. In the above technical solution, by comparing the welding seam edge image identified from the two-dimensional welding image with the welding seam target datum line identified from the three-dimensional composite image, when the offset comparison result is consistent with the preset threshold range, the welding seam edge image is determined as the weld quality detection region. Since the welding seam edge image can be obtained more accurately by identifying the two-dimensional welding image than by identifying the three-dimensional welding image, while the welding seam target datum line can be obtained more accurately by identifying the three-dimensional welding image than by identifying the two-dimensional welding image, the welding seam quality detection region obtained by the method above is more accurate, and a welding image with an obvious problem can be eliminated, thus improving the accuracy and efficiency of the welding seam quality detection result.

Other features and advantages of the disclosure will be set forth in the following description, and are partially apparent from the description, or are learned by implementing the disclosure. The objectives and other advantages of the disclosure may be achieved and obtained by the structure particularly pointed out in the description, the claims and the drawings.

## BRIEF DESCRIPTION OF THE DRAWINGS

FIG. 1 is schematic diagram of a system architecture platform for executing a method for determining a welding seam quality detection region provided by an embodiment of the disclosure;

FIG. 2 is a flow chart of the method for determining a welding seam quality detection region provided by the embodiment of the disclosure;

FIG. 3 is a flow chart of welding fume judgment in the method for determining a welding seam quality detection region provided by the embodiment of the disclosure;

FIG. 4 is a schematic diagram of the welding fume judgment in the method for determining a welding seam quality detection region provided by the embodiment of the disclosure;

FIG. 5 is a flow chart of a welding seam edge image obtained in the method for determining a welding seam quality detection region provided by the embodiment of the disclosure;

FIG. 6 is a schematic diagram of the welding seam edge image obtained in the method for determining a welding seam quality detection region provided by the embodiment of the disclosure;

FIG. 7 is a flow chart of a welding seam target datum line generated in the method for determining a welding seam quality detection region provided by the embodiment of the disclosure;

FIG. 8 is a schematic diagram of the welding seam target datum line generated in the method for determining a welding seam quality detection region provided by the embodiment of the disclosure; and

FIG. 9 is a flow chart of a mapping relation matrix obtained in the method for determining a welding seam quality detection region provided by the embodiment of the disclosure.

## DETAILED DESCRIPTION

To make the objectives, technical solutions, and advantages of the disclosure clearer, the disclosure is further described in detail hereinafter with reference to the drawings and the embodiments. It should be understood that the specific embodiments described herein are only used for explaining the disclosure, and are not intended to limit the disclosure.

It should be noted that although the functional module division is performed in the schematic diagram of the device and the logical sequence is shown in the flow chart, the module division may be different from that as shown, or the steps shown or described may be executed in a sequence different from that in the flow chart in some cases. The terms "first", "second", etc. in the specification, the claims, and the drawings above are used to distinguish between similar objects, and are not necessarily used to describe a specific order or sequence.

Embodiments of the disclosure provides a method and device for determining a welding seam quality detection region, a computer and a storage medium. The method for determining a welding seam quality detection region comprises: acquiring a two-dimensional welding image and a three-dimensional welding image of a target workpiece that has been welded; performing welding fume judgment on the two-dimensional welding image to obtain a welding fume judgment result; performing an identification process on the two-dimensional welding image according to the welding fume judgment result to obtain a welding seam edge image; performing a calibration process on the two-dimensional welding image and the three-dimensional welding image to obtain a mapping relation matrix; mapping the welding seam edge image of the two-dimensional welding image to the three-dimensional welding image according to the mapping relation matrix to obtain a three-dimensional composite image; performing an identification process on the three-dimensional composite image to obtain a welding seam target datum line; performing an offset comparison process on the welding seam edge image and the welding seam target datum line (that is, obtaining a distance between an edge parallel to the welding seam target datum line and the welding seam target datum line, and then comparing the distance with a preset distance according to the welding seam target datum line) to obtain an offset comparison result; and when the offset comparison result is consistent with a preset threshold range, determining the welding seam edge image as the welding seam quality detection region. In a technical solution of the embodiment, by comparing the welding seam edge image identified from the two-dimensional welding image with the welding seam target datum line identified from the three-dimensional composite image, when the offset comparison result is consistent with the preset threshold range, the welding seam edge image is determined as the weld quality detection region. Since the welding seam edge image can be obtained more accurately by identifying the two-dimensional welding image than by identifying the three-dimensional welding image, while the welding seam target datum line can be obtained more accurately by identifying the three-dimensional welding image than by identifying the two-dimensional welding image, the welding seam quality detection region obtained by the method above is more accurate, and a welding image with an obvious problem can be eliminated, thus improving the accuracy and efficiency of the welding seam quality detection results.

The embodiments of the disclosure are further described hereinafter with reference to the drawings.

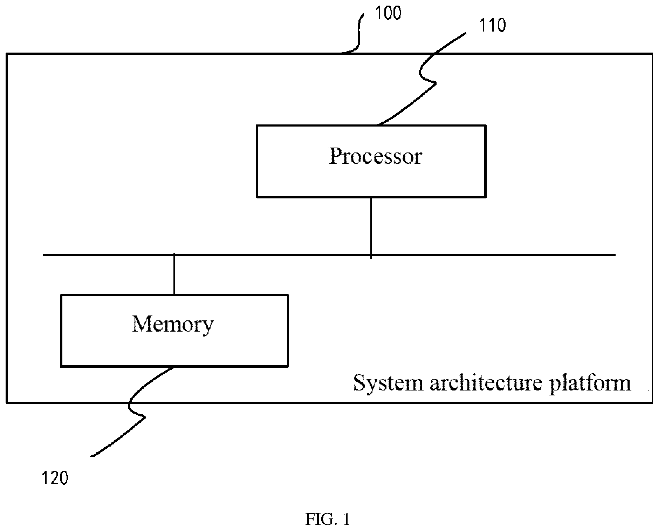

As shown in FIG. 1, FIG. 1 is schematic diagram of a system architecture platform 100 used in a method for determining a welding seam quality detection region provided by an embodiment of the disclosure.

In an example of FIG. 1, the system architecture platform 100 is provided with a processor 110 and a memory 120, wherein the processor 110 and the memory 120 may be connected by a bus or other modes. Connection by the bus is taken as an example in FIG. 1.

The memory 120 is used as a non-transient computer-readable storage medium, and may be configured for storing a non-transient software program and a non-transient computer-executable program. In addition, the memory 120 may comprise a high-speed random access memory, and may further comprise a non-transient memory, such as at least one disk storage device, flash memory device, or other non-transient solid-state storage devices. In some embodiments, the memory 120 may optionally comprise memories remotely arranged relative to the processor 110, and these remote memories may be connected to the processor 110 through a network. Examples of the network above comprise, but are not limited to, the Internet, the Intranet, a local region network, a mobile communication network, and a combination thereof.

It can be understood by those having ordinary skills in the art that the system architecture platform may be applied to a 5G communication network system, a subsequently evolved mobile communication network system, etc., which is not specifically limited in the embodiment.

It can be understood by those having ordinary skills in the art that the system architecture platform shown in FIG. 1 does not constitute a limitation to the embodiment of the disclosure, and may comprise more or less components than those shown in the drawing, or combine some components, or comprise components with different arrangements.

The system architecture platform 100 may be an independent computer, or the system architecture platform 100 providing basic cloud computing services such as cloud service, cloud database, cloud computing, cloud function, cloud storage, network service, cloud communication, middleware service, domain name service, security service, Content Delivery Network (CDN), big data and artificial intelligence platform.

The computer may further comprise: a two-dimensional camera module configured for acquiring a two-dimensional image, a three-dimensional camera module configured for obtaining a three-dimensional welding image, a Radio Frequency (RF) circuit, an input unit, a display unit, a sensor, an audio circuit, a wireless fidelity (WiFi) module, a processor, a power supply and other components. It can be understood by those having ordinary skills in the art that the embodiment has no unique limitation to structures of the device, and may comprise more or less components than those in the embodiment, or combine some components, or comprise components with different arrangements.

The RF circuit may be configured for receiving and sending a signal in a process of receiving and sending information or communication, and particularly configured for receiving downlink information of a base station and then sending the downlink information to the processor for processing, and additionally configured for sending designed uplink data to the base station. Generally, the RF circuit comprises, but is not limited to, an antenna, at least one amplifier, a transceiver, a coupler, a Low Noise Amplifier (LNA), a duplexer, etc. In addition, the RF circuit may also communicate with the network and other devices through wireless communication. Any communication standard or protocol may be used for the wireless communication above, and the wireless communication above comprises, but is not limited to, a Global System of Mobile communication (GSM), a General Packet Radio Service (GPRS), a Code Division Multiple Access (CDMA), a Wideband Code Division Multiple Access (WCDMA), Long Term Evolution (LTE), an E-mail, a Short Messaging Service (SMS), etc.

The memory 120 may also be configured for storing a software program and a module, and the processor executes various function applications of the device and data processing by operating the software program and the module stored in the memory. The memory may mainly comprise a program storage region and a data storage region, wherein the program storage region may store an operating system, an application program needed by at least one function (such as a sound playing function and an image playing function), etc.; and the data storage region may store data (such as audio data and a phone book) created according to the use of the device, etc. In addition, the memory may comprise a high-speed random access memory, and may further comprise a nonvolatile memory, such as at least one disk storage device, a flash memory device, or other volatile solid storage devices.

The input unit may be configured for receiving input digit or character information, and generating key signal input related to the setting and function control of the device. Specifically, the input unit may comprise a touch panel and other input devices. The touch panel, also known as a touch screen, may collect a touch operation on or near the touch panel (such as an operation on or near the touch panel with any suitable object or accessory such as a finger or a touch pen), and drive a corresponding connection device according to a preset program. Optionally, the touch panel may comprise a touch detection device and a touch controller. The touch detection device detects a touch orientation, detects a signal generated by the touch operation, and transmits the signal to the touch controller; and the touch controller receives touch information from the touch detection device, converts the touch information into touch point coordinates, and then sends the touch point coordinates to the processor, and can receive a command sent by the processor and execute the command. In addition, the touch panel may be implemented in various categories such as a resistive type, a capacitive type, an infrared ray and a surface acoustic wave. Except for the touch panel, the input unit may further comprise other input devices. Specifically, other input devices comprise, but are not limited to, one or more of a physical keyboard, a function key (such as a volume control key and a switch key), a trackball, a mouse, a joystick, etc.

The display unit may be configured for displaying input information or provided information and various menus of the device. The display unit may comprise a display panel, and optionally, the display panel may be configured in forms of a Liquid Crystal Display (LCD), an Organic Light-Emitting Diode (OLED), etc. Further, the touch panel may cover the display panel, and when detecting the touch operation on or near the touch panel, the touch panel transmits the touch operation to the processor to determine a category of a touch event, and then the processor provides corresponding visual output on the display panel according to the category of the touch event. Although the touch panel and the display panel are two independent components for realizing input and output functions of the device, the touch panel and the display panel may be integrated to realize the input and output functions of the device in some embodiments.

The device may further comprise at least one sensor, such as a light sensor, a motion sensor, and other sensors. Specifically, the light sensor may comprise an ambient light sensor and a proximity sensor, wherein the ambient light sensor may adjust brightness of the display panel according to brightness of ambient light, and the proximity sensor may turn off the display panel and/or backlight when the device moves to the ears. As a type of motion sensor, an accelerometer sensor may detect the magnitude of acceleration in all directions (generally three axes), may detect a magnitude and a direction of gravity at rest, and may be used in the application of device posture identification (such as horizontal and vertical screen switching, related games and magnetometer posture calibration) and a function related to vibration identification (such as a pedometer and tapping). The device may be further provided with other sensors such as a gyroscope, a barometer, a hygrometer, a thermometer and an infrared sensor, which will not be repeated herein.

The audio circuit, speaker and microphone may be provided with an audio interface. The audio circuit may convert received audio data into an electrical signal and then transmit the electrical signal to the speaker, and the speaker converts the electrical signal into a sound signal for output. On the other hand, the microphone converts the collected sound signal into an electrical signal, the audio circuit receives the electrical signal, converts the electrical signal into audio data and then outputs the audio data to the processor for processing, and then the RF circuit sends the audio data to another device, or outputs the audio data to the memory for further processing.

WiFi is a short-distance wireless transmission technology, and the device may send and receive E-mails, browse web pages and access streaming media through a WiFi module, so that the WiFi module provides wireless broadband Internet access. The WiFi module is not a necessary component of the device, and may be omitted as needed without changing the essence of the disclosure.

The processor 110 is a control center of the device, which connects all parts of the whole device with various interfaces and lines, and executes the various functions and processes the data of the device by running or executing the software program and/or the module stored in the memory and calling the data stored in the memory, thus monitoring the device as a whole. Optionally, the processor may comprise one or more processing units. Preferably, the processor may be integrated with an application processor and a modem processor, wherein the application processor mainly deals with an operating system, an operating interface, an application program, etc., and the modem processor mainly deals with wireless communication. It can be understood that the modem processor may not be integrated into the processor.

The device further comprises a power supply (such as a battery) that supplies power to each component. Preferably, the power supply may be logically connected with the processor through a power supply management system, thus realizing functions of charging and discharging management and power consumption management through the power supply management system.

Although not shown, the device may further comprise a camera, a Bluetooth module, etc., which will not be repeated herein.

Based on the system architecture platform above, a method for determining a welding seam quality detection region according to embodiments of the disclosure are presented below.

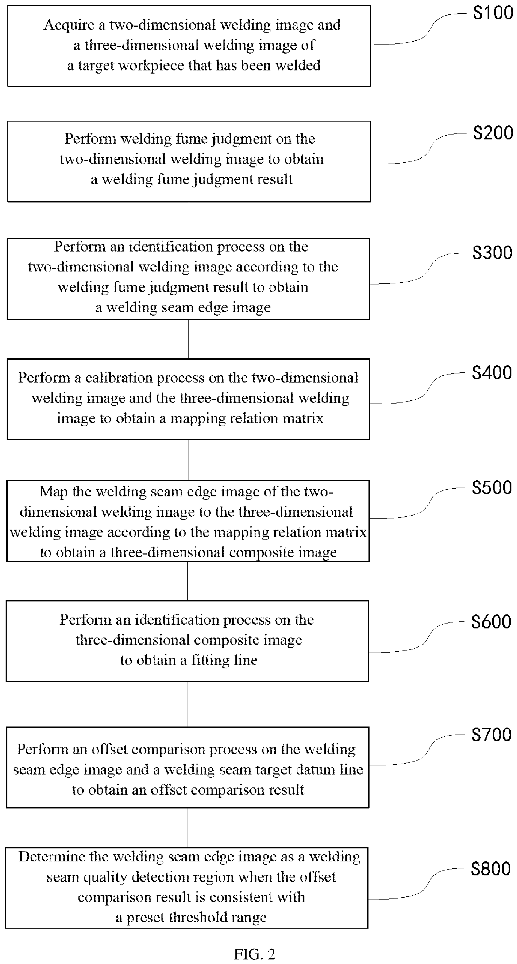

As shown in FIG. 2, FIG. 2 is a flow chart of the method for determining a welding seam quality detection region provided by an embodiment of the disclosure. The method for determining a welding seam quality detection region is applied to the architecture platform above, and the method for determining a welding seam quality detection region comprises, but is not limited to, step S 100, step S200, step S300, step S400, step S500, step S600, step S700 and step S800.

In step S 100, a two-dimensional welding image and a three-dimensional welding image of a target workpiece that has been welded are acquired.

Specifically, when the target workpiece is subjected to the welding process, the target workpiece will be sent to a welding seam detection process. The two-dimensional camera module may be controlled to photograph the target workpiece at a fixed position to obtain the two-dimensional welding image first, and the three-dimensional camera module may also be controlled to photograph the target workpiece at a fixed position to obtain the three-dimensional welding image. The computer may store the two-dimensional welding image and the three-dimensional welding image in a hard disk according to detection situation, and may also directly call the two-dimensional welding image and the three-dimensional welding image into a cache to directly perform an image identification and analysis process, that is to start the procedures of the method for determining a welding seam quality detection region.

In step S200, a welding fume judgment process is performed on the two-dimensional welding image to obtain a welding fume judgment result.

Specifically, after the two-dimensional welding image and the three-dimensional welding image are acquired, an identification and judgment process may be performed on the two-dimensional welding image first to judge whether welding fume is generated on a surface of the target workpiece after the welding process and generate the welding fume judgment result, and then different identification programs may be started for the two-dimensional welding image according to the welding fume judgment result.

In step S300, an identification process is performed on the two-dimensional welding image according to the welding fume judgment result to obtain a welding seam edge image.

Specifically, different identification processes may be performed on the two-dimensional welding image according to the welding fume judgment result, thus obtaining the welding seam edge image by identifying the two-dimensional welding image. For example, when the welding fume judgment result indicates the existence of the welding fume, a welding fume elimination process is performed on the two-dimensional welding image to obtain the welding seam edge image by identifying. For another example, when the welding fume judgment result indicates the non-existence of the welding fume, a searching process is performed on the two-dimensional welding image through an edge identification tool to obtain the welding seam edge image.

In step S400, a calibration process is performed on the two-dimensional welding image and the three-dimensional welding image to obtain a mapping relation matrix.

Specifically, after the welding seam edge image of the two-dimensional welding image is obtained, or after the two-dimensional welding image and the three-dimensional welding image are acquired, the calibration process is performed on the two-dimensional welding image and the three-dimensional welding image, thus obtaining the mapping relation matrix, and the mapping relation matrix is used for calibrating a feature part in the two-dimensional welding image and a corresponding feature part in the three-dimensional welding image.

In step S500, the welding seam edge image of the two-dimensional welding image is mapped to the three-dimensional welding image according to the mapping relation matrix to obtain a three-dimensional composite image.

Specifically, the generated welding seam edge image of the two-dimensional welding image is mapped to the three-dimensional welding image according to the calculated mapping relation matrix to obtain the fused three-dimensional composite image, and the high-accuracy welding seam edge image obtained by identifying the two-dimensional welding image can be accurately mapped to the three-dimensional welding image, so as to be prepared for subsequent image analysis.

In step S600, an identification process is performed on the three-dimensional composite image to obtain a welding seam target datum line.

Specifically, the identification process is performed on the three-dimensional composite image to obtain the welding seam target datum line corresponding to a welding seam, and the welding seam target datum line is used as a datum line for comparing with the welding seam edge image.

In step S700, an offset comparison process is performed on the welding seam edge image and the welding seam target datum line to obtain an offset comparison result.

Specifically, an offset of a boundary of the welding seam edge image relative to the welding seam target datum line is calculated, and then the offset is compared with a preset threshold range, thus obtaining the offset comparison result.

In step S800, when the offset comparison result is consistent with the preset threshold range, the welding seam edge image is determined as the welding seam quality detection region.

Specifically, after the three-dimensional composite image generates the welding seam target datum line corresponding to the welding seam, the offset comparison process is performed on the welding seam edge image and the welding seam target datum line to obtain the offset comparison result. When the offset comparison result is consistent with the preset threshold range, the welding seam edge image is determined as the welding seam quality detection region, and then the welding seam quality detection region is detected to judge whether the welding of the target workpiece meets a standard. Since the welding seam edge image can be obtained more accurately by identifying the two-dimensional welding image than by identifying the three-dimensional welding image, while the welding seam target datum line can be obtained more accurately by identifying the three-dimensional welding image than by identifying the two-dimensional welding image, the welding seam quality detection region obtained by fusing the two images identified through the method above is more accurate, and a welding image with an obvious problem can be eliminated, thus improving the accuracy and efficiency of the welding seam quality detection result.

In an embodiment, when the welding quality of the target workpiece is detected, the two-dimensional welding image and the three-dimensional welding image of the target workpiece subjected to the welding process may be acquired. Then the image identification process is performed on the two-dimensional welding image first, for example, the welding fume judgment process is performed on the two-dimensional welding image to obtain the welding fume judgment result first, and then the identification process is performed on the two-dimensional welding image according to the welding fume judgment result to obtain the welding seam edge image. The calibration process may be performed on the two-dimensional welding image and the three-dimensional welding image after the processing of the two-dimensional welding image or during the processing of the two-dimensional welding image, then the welding seam edge image of the two-dimensional welding image is mapped to the three-dimensional welding image according to the mapping relation matrix to obtain the three-dimensional composite image. Then the identification process is performed on the three-dimensional composite image to obtain the welding seam target datum line. The offset comparison process is performed on the welding seam edge image and the welding seam target datum line to obtain the offset comparison result. When the offset comparison result is consistent with the preset threshold range, the welding seam edge image is determined as the welding seam quality detection region. Finally, the welding seam quality detection region is detected to judge whether the welding of the target workpiece meets the standard. In the technical solution of the embodiment, since the welding seam edge image can be obtained more accurately by identifying the two-dimensional welding image than by identifying the three-dimensional welding image, while the welding seam target datum line can be obtained more accurately by identifying the three-dimensional welding image than by identifying the two-dimensional welding image, the welding seam quality detection region obtained by the method in the embodiment is more accurate, and a welding image with an obvious problem can be eliminated, thus improving the accuracy and efficiency of the welding seam quality detection result.

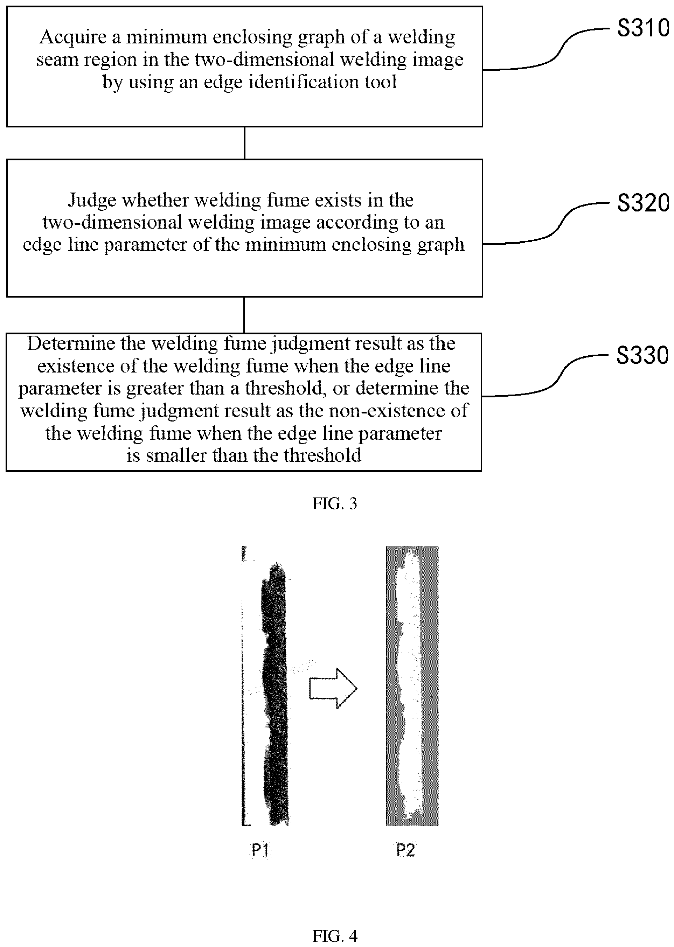

With reference to FIG. 3, in an embodiment, step S200 comprises, but is not limited to, step S310, step S320 and step S330.

In step S310, a minimum enclosing graph of a welding seam region in the two-dimensional welding image is acquired by using a spot analysis tool.

In step S320, whether welding fume exists in the two-dimensional welding image is judged according to an edge line parameter of the minimum enclosing graph.

In step S330, when the edge line parameter is greater than a threshold, the welding fume judgment result indicates the existence of the welding fume, or when the edge line parameter is smaller than the threshold, the welding fume judgment result indicates the non-existence of the welding fume.

In an embodiment, with reference to FIG. 4, the two-dimensional welding image is acquired through a 2D area-array camera (see P1), then a minimum enclosing rectangle of the welding seam region in the two-dimensional welding image is acquired by using the edge identification tool (see P2), and whether the welding fume exists on two sides of the welding seam is judged according to a length and a width of the enclosing rectangle. When the edge line parameter is greater than the threshold, the welding fume judgment result indicates the existence of the welding fume, or when the edge line parameter is smaller than the threshold, the welding fume judgment result indicates the non-existence of the welding fume.

It should be noted that the minimum enclosing rectangle of the welding seam region in the two-dimensional welding image may be acquired by using the edge identification tool, and other enclosing shapes may also be acquired, which is not specifically limited in the embodiment.

It should be noted that the edge identification tool may be the spot analysis tool, and may also be other edge identification tools, which is not uniquely limited in the embodiment.

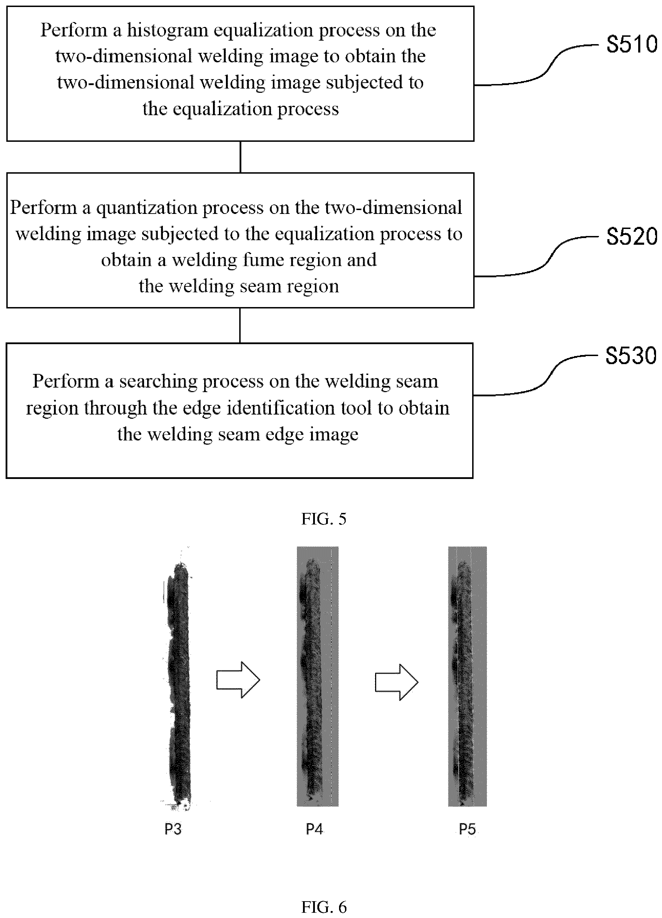

With reference to FIG. 5, in an embodiment, when the welding fume judgment result indicates the existence of the welding fume, step S300 comprises, but is not limited to, step S510, step S520 and step S530.

In step S510, a histogram equalization process is performed on the two-dimensional welding image to obtain the two-dimensional welding image subjected to the equalization process.

In step S520, a quantization process is performed on the two-dimensional welding image subjected to the equalization process to obtain a welding fume region and the welding seam region.

In step S530, a searching process is performed on the welding seam region through the edge identification tool to obtain the welding seam edge image.

In an embodiment, with reference to FIG. 6, when the welding fume judgment result of the two-dimensional welding image indicates the existence of the welding fume, the histogram equalization process is performed on the two-dimensional welding image, pixels of the welding seam region and the welding fume region in the two-dimensional welding image are relatively evenly distributed to obtain the two-dimensional welding image subjected to the equalization process (see P3), and then a 128-level quantization process is performed on the two-dimensional welding image subjected to the equalization process, so that the welding seam region and the welding fume region may be separated according to an interval (see P4). Then, an edge of the welding seam region may be searched for through the edge identification tool to obtain the welding seam edge image, the welding seam edge image is output to the edge identification tool, and effective point coordinates of the welding seam edge image are found by using a least square method (see P5).

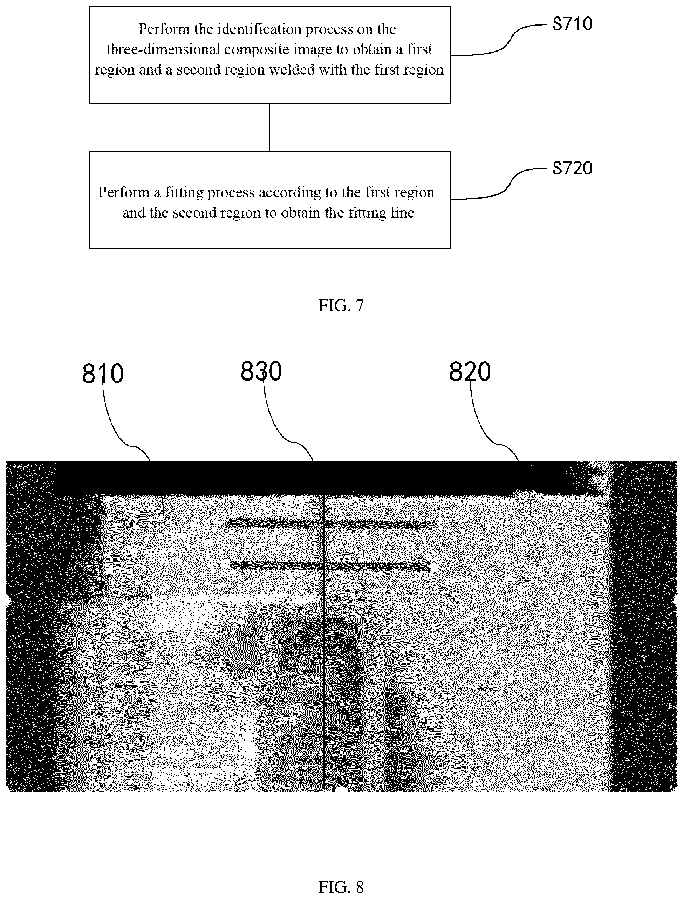

With reference to FIG. 7, in an embodiment, step S600 comprises, but is not limited to, step S710 and step S720.

In step S710, the identification process is performed on the three-dimensional composite image to obtain a first region and a second region welded with the first region.

Specifically, compared with the two-dimensional image, the three-dimensional image has the advantage that more data reflecting image characteristics can be acquired from the three-dimensional image, such as height data, which means that the height data of the three-dimensional composite image can be acquired, and then the identification process is performed on the three-dimensional composite image according to the height data to obtain the first region and the second region welded with the first region, wherein a height value of the first region is different from a height value of the second region.

In an embodiment, the target workpiece is a workpiece formed by welding a side edge and an end plate, and then height data of the side edge and height data of the end plate in the three-dimensional welding image obtained by scanning the target workpiece through a three-dimensional scanner are inconsistent, or the side edge and the end plate in the three-dimensional welding image can be identified through the height data to obtain a side edge region and an end plate region welded with the side edge region.

In step S720, a fitting process is performed according to the first region and the second region to obtain the welding seam target datum line.

Specifically, the height value of the first region and the height value of the second region are acquired, then a first-order derivation process is performed on the height value of the first region and the height value of the second region to obtain at least two edge points between the first region and the second region, and then the fitting process is performed on the at least two edge points by using a welding seam target datum line tool to obtain the welding seam target datum line.

In an embodiment, with reference to FIG. 8, when the target workpiece is the workpiece formed by welding the side edge and the end plate, the height value of the side edge and the height value of the end plate may be acquired respectively, and then edge points of the end plate are calculated by using a first-order derivation horizontal X-direction gradient: Rx=f(x+1)-f(x). Then, an edge straight line of the end plate is fitted by using a straight line fitting tool, and the fitted edge straight line of the end plate is usually a short segment, which may be subjected to an extension process to obtain the welding seam target datum line.

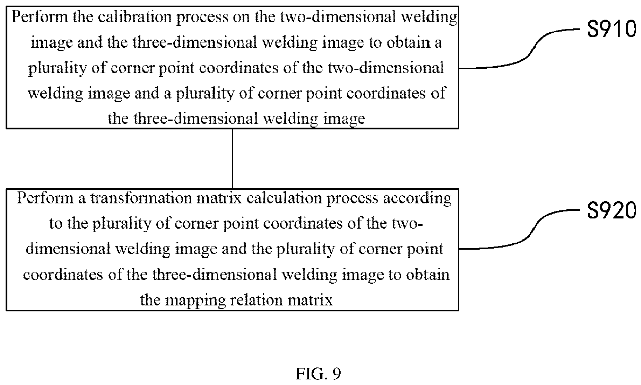

With reference to FIG. 9, in an embodiment, step S400 comprises, but is not limited to, step S910 and step S920.

In step S910, the calibration process is performed on the two-dimensional welding image and the three-dimensional welding image to obtain a plurality of corner point coordinates of the two-dimensional welding image and a plurality of corner point coordinates of the three-dimensional welding image.

In an embodiment, coordinates of the two-dimensional welding image photographed by a two-dimensional camera are: (x1, y1), (x2, y2), (x3, y3), (x4, y4), (x5, y5), (x6, y6), (x7, y7), (x8, y8) and (x9, y9); and coordinates of the three-dimensional welding image photographed by a three-dimensional camera are: (x1', y1'), (x2', y2'), (x3', y3'), (x4', y4'), (x5', y5'), (x6', y6'), (x7', y7'), (x8', y8') and (x9', y9').

It should be noted that the number of the coordinates is not limited in the embodiment, and may be set according to actual situation and accuracy requirement.

In step S920, a transformation matrix calculation process is performed according to the plurality of corner point coordinates of the two-dimensional welding image and the plurality of corner point coordinates of the three-dimensional welding image to obtain the mapping relation matrix.

In an embodiment, it is known that the transformation matrix is directly calculated by making coordinates of 9 points of the image photographed by the 2D camera correspond to coordinates of 9 points of the image photographed by the 3D camera to obtain a mapping relation matrix A. Through mathematical expression, step S820 is specifically as follows:

$$\begin{cases} x' = ax + by + c \\ y' = a'x + b'y + c' \end{cases}$$

$$\begin{bmatrix} x_1 & y_1 & 1 \\ x_2 & y_2 & 1 \\ \vdots & \vdots & \vdots \\ x_9 & y_9 & 1 \end{bmatrix} \begin{bmatrix} a & a' \\ b & b' \\ c & c' \end{bmatrix} = \begin{bmatrix} x_1' & y_1' \\ x_2' & y_2' \\ \vdots & \vdots \\ x_9' & y_9' \end{bmatrix}$$

$$A = \begin{bmatrix} a & a' \\ b & b' \\ c & c' \end{bmatrix}$$

Based on the method for determining a welding seam quality detection region above, a device for determining a welding seam quality detection region, and a computer-readable storage medium according to embodiments of the disclosure are respectively presented below.

An embodiment of the disclosure further provides a device for determining a welding seam quality detection region, which comprises:

an acquisition module configured for acquiring a two-dimensional welding image and a three-dimensional welding image of a target workpiece that has been welded;

a judgment module configured for performing welding fume judgment on the two-dimensional welding image to obtain a welding fume judgment result;

an identification module configured for performing an identification process on the two-dimensional welding image according to the welding fume judgment result to obtain a welding seam edge image;

a calibration module configured for performing a calibration process on the two-dimensional welding image and the three-dimensional welding image to obtain a mapping relation matrix;

a mapping module configured for mapping the welding seam edge image of the two-dimensional welding image to the three-dimensional welding image according to the mapping relation matrix to obtain a three-dimensional composite image;

a fitting module configured for performing an identification process on the three-dimensional composite image to obtain a welding seam target datum line;

a comparison module configured for performing an offset comparison process on the welding seam edge image and the welding seam target datum line to obtain an offset comparison result; and

a determination module configured for, when the offset comparison result is consistent with a preset threshold range, determining the welding seam edge image as the welding seam quality detection region.

It should be noted that the above device for determining a welding seam quality detection region according to embodiments of the disclosure adopts the same technical means, solves the same technical problem and achieves the same technical effect as the method for determining a welding seam quality detection region, which will not be repeated in detail herein. Details may refer to the embodiments of the method for determining a welding seam quality detection region.

In addition, an embodiment of the disclosure provides a computer including: a memory, a processor, and a computer program stored on the memory and executable on the processor.

The processor and the memory may be connected by a bus or in other modes.

It should be noted that the computer in this embodiment is arranged in the system architecture platform in the embodiment shown in FIG. 1, and comprises the memory and the processor, which can form a part of the system architecture platform in the embodiment shown in FIG. 1, and both of which belong to the same inventive concept, and thus have the same implementation principle and beneficial effects, which will not be described in detail herein.

Non-transient software program and instruction needed to realize the method for determining a welding seam quality detection region of the computer in the embodiment above are stored in the memory, and when the non-transient software program and instruction are executed by the processor, the method for determining a welding seam quality detection region in the embodiment above is executed. For example, method steps S100 to S800 in FIG. 2, method steps S310 to S330 in FIG. 3, method steps S510 to S530 in FIG. 5, method steps S710 to S720 in FIG. 7 and method steps S910 to S920 in FIG. 9 described above are executed.

In addition, an embodiment of the disclosure further provides a computer-readable storage medium, the computer-readable storage medium stores a computer-executable instruction, and the computer-executable instruction is used for executing the method for determining a welding seam quality detection region above. For example, method steps S100 to S800 in FIG. 2, method steps S310 to S330 in FIG. 3, method steps S510 to S530 in FIG. 5, method steps S710 to S720 in FIG. 7 and method steps S910 to S920 in FIG. 9 described above are executed.

Those of ordinary skills in the art may understand that all or some of steps and systems in the method disclosed above may be implemented as software, firmware, hardware and appropriate combinations thereof. Some or all of physical components may be implemented as software executed by the processor, such as a central processing unit, a digital signal processor or a microprocessor, or implemented as hardware, or implemented as an integrated circuit, such as an application-specific integrated circuit. Such software may be distributed on the computer-readable medium, and the computer-readable medium may comprise a computer storage medium (or a non-transitory medium) and a communication medium (or a transitory medium). It is well known to those of ordinary skills in the art that the term 'computer storage medium' comprises a volatile and nonvolatile, removable and non-removable medium implemented in any method or technology for storing information (such as a computer readable instruction, a data structure, a program module, or other data). The computer storage medium comprises, but is not limited to, RAM, ROM, EEPROM, flash memory or other storage technologies, CD-ROM, digital versatile disk (DVD) or other optical disk storage, magnetic box, magnetic tape, magnetic disk storage or other magnetic storage devices, or any other media capable of being used to store desired information and accessed by the computer. Furthermore, it is well known to those of ordinary skills in the art that the communication medium typically comprises a computer readable instruction, a data structure, a program module or other data in a modulated data signal such as a carrier wave or other transmission mechanism, and may comprise any information delivery medium.

The preferred embodiments of the disclosure have been described in detail above, but the disclosure is not limited to the embodiments above. The scope of the invention is defined by the appended claims.

## Claims

1. A method for determining a welding seam quality detection region, comprising:

   acquiring a two-dimensional welding image and a three-dimensional welding image of a target workpiece that has been welded (5100);
   performing welding fume judgment on the two-dimensional welding image to obtain a welding fume judgment result (S200);
   performing an identification process on the two-dimensional welding image according to the welding fume judgment result to obtain a welding seam edge image (S300);

performing a calibration process on the two-dimensional welding image and the three-dimensional welding image to obtain a mapping relation matrix (S400);

mapping the welding seam edge image of the two-dimensional welding image to the three-dimensional welding image according to the mapping relation matrix to obtain a three-dimensional composite image (S500);

performing an identification process on the three-dimensional composite image to obtain a welding seam target datum line (S600);

performing an offset comparison process on the welding seam edge image and the welding seam target datum line to obtain an offset comparison result (S700); and

in response to the offset comparison result being consistent with a preset threshold range, determining the welding seam edge image as the welding seam quality detection region (S800).

2. The method for determining a welding seam quality detection region according to claim 1, wherein the performing welding fume judgment on the two-dimensional welding image to obtain a welding fume judgment result (S200) comprises:

acquiring a minimum enclosing graph of a welding seam region in the two-dimensional welding image by using an edge identification tool (S310);

judging whether welding fume exists in the two-dimensional welding image according to an edge line parameter of the minimum enclosing graph (S320); and

in response to the edge line parameter being greater than a threshold, determining the welding fume judgment result as existence of the welding fume, or in response to the edge line parameter being smaller than the threshold, determining the welding fume judgment result as non-existence of the welding fume (S330).

3. The method for determining a welding seam quality detection region according to claim 1 or 2, wherein the performing an identification process on the two-dimensional welding image according to the welding fume judgment result to obtain a welding seam edge image (S300) comprises:

in response to the welding fume judgment result indicating existence of the welding fume, performing a welding fume elimination process on the two-dimensional welding image to obtain the welding seam edge image; or

in response to the welding fume judgment result indicating non-existence of the welding fume, performing a searching process on the two-dimensional welding image through the edge identification tool to obtain the welding seam edge image.

4. The method for determining a welding seam quality detection region according to claim 3, wherein in response to the welding fume judgment result indicating existence of the welding fume, performing a welding fume elimination process on the two-dimensional welding image to obtain the welding seam edge image comprises:

performing a histogram equalization process on the two-dimensional welding image to obtain the two-dimensional welding image subjected to the equalization process (S510);

performing a quantization process on the two-dimensional welding image subjected to the equalization process to obtain a welding fume region and the welding seam region (S520); and

performing a searching process on the welding seam region through the edge identification tool to obtain the welding seam edge image (S530).

5. The method for determining a welding seam quality detection region according to claim 1, wherein the performing an identification process on the three-dimensional composite image to obtain a welding seam target datum line (S600) comprises:

performing an identification process on the three-dimensional composite image to obtain a first region and a second region welded with the first region (S710); and

performing a fitting process according to the first region and the second region to obtain the welding seam target datum line (S720).

6. The method for determining a welding seam quality detection region according to claim 5, wherein the performing an identification process on the three-dimensional composite image to obtain a first region and a second region welded with the first region (S710) comprises:

acquiring height data of the three-dimensional composite image; and

performing an identification process on the three-dimensional composite image according to the height data to obtain the first region and the second region welded with the first region, wherein a height value of the first region is different from a height value of the second region.

7. The method for determining a welding seam quality detection region according to claim 5, wherein the performing a fitting process according to the first region and the second region to obtain the welding seam target datum line (S720) comprises:

acquiring a height value of the first region and a height value of the second region;

performing a first-order derivation process on the height value of the first region and the height value of the second region to obtain at least two edge points between the first region and the second region; and

performing the fitting process on the at least two edge points by using a welding seam target datum line tool to obtain the welding seam target datum line.

8. The method for determining a welding seam quality detection region according to claim 1, wherein the performing an offset comparison process on the welding seam edge image and the welding seam target datum line to obtain an offset comparison result (S700) comprises:

calculating an offset of a boundary of the welding seam edge image relative to the welding seam target datum line; and

comparing the offset with the preset threshold range to obtain the offset comparison result.

9. The method for determining a welding seam quality detection region according to claim 1, wherein the performing a calibration process on the two-dimensional welding image and the three-dimensional welding image to obtain a mapping relation matrix (S400) comprises:

performing the calibration process on the two-dimensional welding image and the three-dimensional welding image to obtain a plurality of corner point coordinates of the two-dimensional welding image and a plurality of corner point coordinates of the three-dimensional welding image (S910); and

performing a transformation matrix calculation process according to the plurality of corner point coordinates of the two-dimensional welding image and the plurality of corner point coordinates of the three-dimensional welding image to obtain the mapping relation matrix (S920).

10. A device for determining a welding seam quality detection region, comprising:

an acquisition module configured for acquiring a two-dimensional welding image and a three-dimensional welding image of a target workpiece that has been welded;

a judgment module configured for performing welding fume judgment on the two-dimensional welding image to obtain a welding fume judgment result;

an identification module configured for performing an identification process on the two-dimensional welding image according to the welding fume judgment result to obtain a welding seam edge image;

a calibration module configured for performing a calibration process on the two-dimensional welding image and the three-dimensional welding image to obtain a mapping relation matrix;

a mapping module configured for mapping the welding seam edge image of the two-dimensional welding image to the three-dimensional welding image according to the mapping relation matrix to obtain a three-dimensional composite image;

a fitting module configured for performing an identification process on the three-dimensional composite image to obtain a welding seam target datum line;

a comparison module configured for performing an offset comparison process on the welding seam edge image and the welding seam target datum line to obtain an offset comparison result; and

a determination module configured for, in response to the offset comparison result being consistent with a preset threshold range, determining the welding seam edge image as the welding seam quality detection region.

11. A computer, comprising a memory, a processor, and a computer program stored on the memory and executable on the processor, wherein the computer program, when executed by the processor, implements the method for determining a welding seam quality detection region according to any one of claims 1 to 9.

**12.** A computer-readable storage medium, storing a computer-executable instruction, wherein the computer-executable instruction is used for executing the method for determining a welding seam quality detection region according to any one of claims 1 to 9.

**Patentansprüche**

**1.** Verfahren zum Bestimmen einer Schweißnahtqualitätserkennungsregion, das Folgendes beinhaltet:

Erfassen eines zweidimensionalen Schweißbildes und eines dreidimensionalen Schweißbildes eines Zielwerkstücks, das geschweißt wurde (S100);
Durchführen einer Schweißrauchbeurteilung an dem zweidimensionalen Schweißbild, um ein Schweißrauchbeurteilungsergebnis zu erhalten (S200);
Durchführen eines Identifikationsprozesses an dem zweidimensionalen Schweißbild gemäß dem Schweißrauchbeurteilungsergebnis, um ein Schweißnahtkantenbild zu erhalten (S300);
Durchführen eines Kalibrierungsprozesses an dem zweidimensionalen Schweißbild und dem dreidimensionalen Schweißbild, um eine Mapping-Relationsmatrix zu erhalten (S400);
Mappen des Schweißnahtkantenbildes des zweidimensionalen Schweißbildes auf das dreidimensionale Schweißbild gemäß der Mapping-Relationsmatrix, um ein dreidimensionales zusammengesetztes Bild zu erhalten (S500);
Durchführen eines Identifikationsprozesses an dem dreidimensionalen zusammengesetzten Bild, um eine Schweißnahtzielbezugslinie zu erhalten (S600);
Durchführen eines Versatzvergleichsprozesses an dem Schweißnahtkantenbild und der Schweißnahtzielbezugslinie, um ein Versatzvergleichsergebnis zu erhalten (S700); und
Bestimmen, als Reaktion darauf, dass das Versatzvergleichsergebnis mit einem voreingestellten Schwellenbereich übereinstimmt, des Schweißnahtkantenbildes als die Schweißnahtqualitätserkennungsregion (S800).

**2.** Verfahren zum Bestimmen einer Schweißnahtqualitätserkennungsregion nach Anspruch 1, wobei das Durchführen der Schweißrauchbeurteilung an dem zweidimensionalen Schweißbild zum Erhalten eines Schweißrauchbeurteilungsergebnisses (S200) Folgendes beinhaltet:

Erfassen einer Mindesumhüllungskurve einer Schweißnahtregion in dem zweidimensionalen Schweißbild mittels eines Kantenidentifizierungswerkzeugs (S310);
Beurteilen, ob Schweißrauch in dem zweidimensionalen Schweißbild vorhanden ist, gemäß einem Kantenlinienparameter der Mindestumhüllungskurve (S320); und
Bestimmen, als Reaktion darauf, dass der Kantenlinienparameter größer als ein Schwellenwert ist, des Schweißrauchbeurteilungsergebnisses als Vorhandensein des Schweißrauchs, oder Bestimmen, als Reaktion darauf, dass der Kantenlinienparameter kleiner als der Schwellenwert ist, des Schweißrauchbeurteilungsergebnisses als Nichtvorhandensein des Schweißrauchs (S330).

**3.** Verfahren zum Bestimmen einer Schweißnahtqualitätserkennungsregion nach Anspruch 1 oder 2, wobei das Durchführen eines Identifikationsprozesses an dem zweidimensionalen Schweißbild gemäß dem Schweißrauchbeurteilungsergebnis zum Erhalten eines Schweißnahtkantenbildes (S300) Folgendes beinhaltet:

Durchführen, als Reaktion darauf, dass das Schweißrauchbeurteilungsergebnis das Vorhandensein des Schweißrauchs anzeigt, eines Schweißraucheliminierungsprozesses an dem zweidimensionalen Schweißbild, um das Schweißnahtkantenbild zu erhalten; oder
Durchführen, als Reaktion darauf, dass das Schweißrauchbeurteilungsergebnis das Nichtvorhandensein des Schweißrauchs anzeigt, eines Suchprozesses an dem zweidimensionalen Schweißbild durch das Kantenidentifikationswerkzeug, um das Schweißnahtkantenbild zu erhalten.

**4.** Verfahren zum Bestimmen einer Schweißnahtqualitätserkennungsregion nach Anspruch 3, wobei das Durchführen, als Reaktion darauf, dass das Schweißrauchbeurteilungsergebnis das Vorhandensein des Schweißrauchs anzeigt, eines Schweißraucheliminierungsprozesses an dem zweidimensionalen Schweißbild zum Erhalten des Schweißnahtkantenbildes Folgendes beinhaltet:

Durchführen eines Histogrammausgleichsprozesses an dem zweidimensionalen Schweißbild, um das dem Ausgleichsprozess unterzogene zweidimensionale Schweißbild zu erhalten (S510);

Durchführen eines Quantisierungsprozesses an dem dem Ausgleichsprozess unterzogenen zweidimensionalen Schweißbild, um eine Schweißrauchregion und die Schweißnahtregion zu erhalten (S520); und
Durchführen eines Suchprozesses an der Schweißnahtregion durch das Kantenidentifikationswerkzeug, um das Schweißnahtkantenbild zu erhalten (S530).

5. Verfahren zum Bestimmen einer Schweißnahtqualitätserkennungsregion nach Anspruch 1, wobei das Durchführen eines Identifikationsprozesses an dem dreidimensionalen zusammengesetzten Bild zum Erhalten einer Schweißnahtzielbezugslinie (S600) Folgendes beinhaltet:

Durchführen eines Identifikationsprozesses an dem dreidimensionalen zusammengesetzten Bild, um eine erste Region und eine mit der ersten Region verschweißte zweite Region zu erhalten (S710); und
Durchführen eines Anpassungsprozesses gemäß der ersten Region und der zweiten Region, um die Schweißnahtzielbezugslinie zu erhalten (S720).

6. Verfahren zum Bestimmen einer Schweißnahtqualitätserkennungsregion nach Anspruch 5, wobei das Durchführen eines Identifikationsprozesses an dem dreidimensionalen zusammengesetzten Bild zum Erhalten einer ersten Region und einer mit der ersten Region verschweißten zweiten Region (S710) Folgendes beinhaltet:

Erfassen von Höhendaten des dreidimensionalen zusammengesetzten Bildes; und
Durchführen eines Identifikationsprozesses an dem dreidimensionalen zusammengesetzten Bild gemäß den Höhendaten, um die erste Region und die mit der ersten Region verschweißte zweite Region zu erhalten, wobei ein Höhenwert der ersten Region von einem Höhenwert der zweiten Region verschieden ist.

7. Verfahren zum Bestimmen einer Schweißnahtqualitätserkennungsregion nach Anspruch 5, wobei das Durchführen eines Anpassungsprozesses gemäß der ersten Region und der zweiten Region zum Erhalten der Schweißnahtzielbezugslinie (S720) Folgendes beinhaltet:

Erfassen eines Höhenwerts der ersten Region und eines Höhenwerts der zweiten Region;
Durchführen eines Ableitungsprozesses erster Ordnung an dem Höhenwert der ersten Region und dem Höhenwert der zweiten Region, um mindestens zwei Kantenpunkte zwischen der ersten Region und der zweiten Region zu erhalten; und
Durchführen des Anpassungsprozesses an den mindestens zwei Kantenpunkten mittels eines Schweißnahtzielbezugslinienwerkzeugs, um die Schweißnahtzielbezugslinie zu erhalten.

8. Verfahren zum Bestimmen einer Schweißnahtqualitätserkennungsregion nach Anspruch 1, wobei das Durchführen eines Versatzvergleichsprozesses an dem Schweißnahtkantenbild und der Schweißnahtzielbezugslinie zum Erhalten eines Versatzvergleichsergebnisses (S700) Folgendes beinhaltet:

Berechnen eines Versatzes einer Grenze des Schweißnahtkantenbildes relativ zu der Schweißnahtzielbezugslinie; und
Vergleichen des Versatzes mit dem voreingestellten Schwellenbereich, um das Versatzvergleichsergebnis zu erhalten.

9. Verfahren zum Bestimmen einer Schweißnahtqualitätserkennungsregion nach Anspruch 1, wobei das Durchführen eines Kalibrierungsprozesses an dem zweidimensionalen Schweißbild und dem dreidimensionalen Schweißbild zum Erhalten einer Mapping-Relationsmatrix (S400) Folgendes beinhaltet:

Durchführen des Kalibrierungsprozesses an dem zweidimensionalen Schweißbild und dem dreidimensionalen Schweißbild, um mehrere Eckpunktkoordinaten des zweidimensionalen Schweißbildes und mehrere Eckpunktkoordinaten des dreidimensionalen Schweißbildes zu erhalten (S910); und
Durchführen eines Transformationsmatrix-Berechnungsprozesses gemäß den mehreren Eckpunktkoordinaten des zweidimensionalen Schweißbildes und den mehreren Eckpunktkoordinaten des dreidimensionalen Schweißbildes, um die Mapping-Relationsmatrix zu erhalten (S920).

10. Gerät zum Bestimmen einer Schweißnahtqualitätserkennungsregion, das Folgendes umfasst:

ein Erfassungsmodul, konfiguriert zum Erfassen eines zweidimensionalen Schweißbildes und eines dreidimensionalen Schweißbildes eines Zielwerkstücks, das geschweißt wurde;

ein Beurteilungsmodul, konfiguriert zum Durchführen einer Schweißrauchbeurteilung an dem zweidimensionalen Schweißbild, um ein Schweißrauchbeurteilungsergebnis zu erhalten;

ein Identifikationsmodul, konfiguriert zum Durchführen eines Identifikationsprozesses an dem zweidimensionalen Schweißbild gemäß dem Schweißrauchbeurteilungsergebnis, um ein Schweißnahtkantenbild zu erhalten;

ein Kalibrierungsmodul, konfiguriert zum Durchführen eines Kalibrierungsprozesses an dem zweidimensionalen Schweißbild und dem dreidimensionalen Schweißbild, um eine Mapping-Relationsmatrix zu erhalten;

ein Mapping-Modul, konfiguriert zum Mappen des Schweißnahtkantenbildes des zweidimensionalen Schweißbildes auf das dreidimensionale Schweißbild gemäß der Mapping-Relationsmatrix, um ein dreidimensionales zusammengesetztes Bild zu erhalten;

ein Anpassungsmodul, konfiguriert zum Durchführen eines Identifikationsprozesses an dem dreidimensionalen zusammengesetzten Bild, um eine Schweißnahtzielbezugslinie zu erhalten;

ein Vergleichsmodul, konfiguriert zum Durchführen eines Versatzvergleichsprozesses an dem Schweißnahtkantenbild und der Schweißnahtzielbezugslinie, um ein Versatzvergleichsergebnis zu erhalten; und

ein Bestimmungsmodul, konfiguriert zum Bestimmen, als Reaktion darauf, dass das Versatzvergleichsergebnis mit einem voreingestellten Schwellenbereich übereinstimmt, des Schweißnahtkantenbildes als die Schweißnahtqualitätserkennungsregion.

11. Computer, der einen Speicher, einen Prozessor und ein in dem Speicher gespeichertes und auf dem Prozessor ausführbares Computerprogramm umfasst, wobei das Computerprogramm bei Ausführung durch den Prozessor das Verfahren zum Bestimmen einer Schweißnahtqualitätserkennungsregion nach einem der Ansprüche 1 bis 9 implementiert.

12. Computerlesbares Speichermedium, das einen computerausführbaren Befehl speichert, wobei der computerausführbare Befehl zur Ausführung des Verfahrens zum Bestimmen einer Schweißnahtqualitätserkennungsregion nach einem der Ansprüche 1 bis 9 verwendet wird.

**Revendications**

1. Procédé de détermination d'une région de détection de qualité de cordon de soudure, comprenant les étapes consistant à :

acquérir une image de soudure bidimensionnelle et une image de soudure tridimensionnelle d'une pièce cible qui a été soudée (5100) ;

réaliser une évaluation de fumée de soudage sur l'image de soudure bidimensionnelle afin d'obtenir un résultat d'évaluation de fumée de soudage (S200) ;

réaliser un processus d'identification sur l'image de soudure bidimensionnelle selon le résultat d'évaluation de fumée de soudage afin d'obtenir une image de contour de cordon de soudure (S300) ;

réaliser un processus d'étalonnage sur l'image de soudure bidimensionnelle et l'image de soudure tridimensionnelle afin d'obtenir une matrice de relation de correspondance (S400) ;

mettre en correspondance l'image de contour de cordon de soudure de l'image de soudure bidimensionnelle avec celle de l'image de soudure tridimensionnelle selon la matrice de relation de correspondance afin d'obtenir une image composée tridimensionnelle (S500) ;

réaliser un processus d'identification sur l'image composée tridimensionnelle afin d'obtenir une ligne de référence cible de cordon de soudure (S600) ;

réaliser un processus de comparaison de décalage sur l'image de contour de cordon de soudure et la ligne de référence cible de cordon de soudure afin d'obtenir un résultat de comparaison de décalage (S700) ; et

en réponse au fait que le résultat de comparaison de décalage est conforme à une plage de seuils prédéfinie, déterminer que l'image de contour de cordon de soudure est la région de détection de qualité de cordon de soudure (S800).

2. Procédé de détermination d'une région de détection de qualité de cordon de soudure selon la revendication 1, dans lequel la réalisation d'une évaluation de fumée de soudage sur l'image de soudure bidimensionnelle afin d'obtenir un résultat d'évaluation de fumée de soudage (S200) comprend les étapes consistant à :

acquérir un graphe inclusif minimal d'une région de cordon de soudure sur l'image de soudure bidimensionnelle au moyen d'un outil d'identification de contour (S310) ;

évaluer s'il existe une fumée de soudage sur l'image de soudure bidimensionnelle selon un paramètre de ligne de contour du graphe inclusif minimal (S320) ; et

en réponse au fait que le paramètre de ligne de contour est supérieur à un seuil, déterminer que le résultat d'évaluation de fumée de soudage indique l'existence de la fumée de soudage, ou en réponse au fait que le paramètre de ligne de contour est inférieur au seuil, déterminer que le résultat d'évaluation de fumée de soudage indique l'inexistence de la fumée de soudage (S330).

3. Procédé de détermination d'une région de détection de qualité de cordon de soudure selon la revendication 1 ou 2, dans lequel la réalisation d'un processus d'identification sur l'image de soudure bidimensionnelle selon le résultat d'évaluation de fumée de soudage afin d'obtenir une image de contour de cordon de soudure (S300) comprend l'étape consistant à :

en réponse au fait que le résultat d'évaluation de fumée de soudage indique l'existence de la fumée de soudage, réaliser un processus d'élimination de fumée de soudage sur l'image de soudure bidimensionnelle afin d'obtenir l'image de contour de cordon de soudure ; ou

en réponse au fait que le résultat d'évaluation de fumée de soudage indique l'inexistence de la fumée de soudage, réaliser un processus de recherche sur l'image de soudure bidimensionnelle par l'intermédiaire de l'outil d'identification de contour afin d'obtenir l'image de contour de cordon de soudure.

4. Procédé de détermination d'une région de détection de qualité de cordon de soudure selon la revendication 3, dans lequel la réalisation d'un processus d'élimination de fumée de soudage sur l'image de soudure bidimensionnelle, en réponse au fait que le résultat d'évaluation de fumée de soudage indique l'existence de la fumée de soudage, afin d'obtenir l'image de contour de cordon de soudure, comprend les étapes consistant à :

réaliser un processus d'égalisation d'histogramme sur l'image de soudure bidimensionnelle afin d'obtenir l'image de soudure bidimensionnelle soumise au processus d'égalisation (S510) ;

réaliser un processus de quantification sur l'image de soudure bidimensionnelle soumise au processus d'égalisation afin d'obtenir une région de fumée de soudage et la région de cordon de soudure (S520) ; et

réaliser un processus de recherche sur la région de cordon de soudure par l'intermédiaire de l'outil d'identification de contour afin d'obtenir l'image de contour de cordon de soudure (S530).

5. Procédé de détermination d'une région de détection de qualité de cordon de soudure selon la revendication 1, dans lequel la réalisation d'un processus d'identification sur l'image composée tridimensionnelle afin d'obtenir une ligne de référence cible de cordon de soudure (S600) comprend les étapes consistant à :

réaliser un processus d'identification sur l'image composée tridimensionnelle afin d'obtenir une première région et une seconde région soudée à la première région (S710) ; et

réaliser un processus d'ajustement selon la première région et la seconde région afin d'obtenir la ligne de référence cible de cordon de soudure (S720).

6. Procédé de détermination d'une région de détection de qualité de cordon de soudure selon la revendication 5, dans lequel la réalisation d'un processus d'identification sur l'image composée tridimensionnelle afin d'obtenir une première région et une seconde région soudée à la première région (S710) comprend les étapes consistant à :

acquérir des données de hauteur de l'image composée tridimensionnelle ; et

réaliser un processus d'identification sur l'image composée tridimensionnelle selon les données de hauteur afin d'obtenir la première région et la seconde région soudée à la première région, une valeur de hauteur de la première région étant différente d'une valeur de hauteur de la seconde région.

7. Procédé de détermination d'une région de détection de qualité de cordon de soudure selon la revendication 5, dans lequel la réalisation d'un processus d'ajustement selon la première région et la seconde région afin d'obtenir la ligne de référence cible de cordon de soudure (S720) comprend les étapes consistant à :

acquérir une valeur de hauteur de la première région et une valeur de hauteur de la seconde région ;

réaliser un processus de dérivation du premier ordre sur la valeur de hauteur de la première région et la valeur de hauteur de la seconde région afin d'obtenir au moins deux points de contour entre la première région et la seconde région ; et

réaliser le processus d'ajustement sur les au moins deux points de contour au moyen d'un outil de ligne de référence cible de cordon de soudure afin d'obtenir la ligne de référence cible de cordon de soudure.

**8.** Procédé de détermination d'une région de détection de qualité de cordon de soudure selon la revendication 1, dans lequel la réalisation d'un processus de comparaison de décalage sur l'image de contour de cordon de soudure et la ligne de référence cible de cordon de soudure afin d'obtenir un résultat de comparaison de décalage (S700) comprend les étapes consistant à :

calculer un décalage d'une limite de l'image de contour de cordon de soudure par rapport à la ligne de référence cible de cordon de soudure ; et
comparer le décalage à la plage de seuils prédéfinie afin d'obtenir le résultat de comparaison de décalage.

**9.** Procédé de détermination d'une région de détection de qualité de cordon de soudure selon la revendication 1, dans lequel la réalisation d'un processus d'étalonnage sur l'image de soudure bidimensionnelle et l'image de soudure tridimensionnelle afin d'obtenir une matrice de relation de correspondance (S400) comprend les étapes consistant à :

réaliser le processus d'étalonnage sur l'image de soudure bidimensionnelle et l'image de soudure tridimensionnelle afin d'obtenir une pluralité de coordonnées de points d'angle de l'image de soudure bidimensionnelle et une pluralité de coordonnées de points d'angle de l'image de soudure tridimensionnelle (S910) ; et
réaliser un processus de calcul de matrice de transformation selon la pluralité de coordonnées de points d'angle de l'image de soudure bidimensionnelle et la pluralité de coordonnées de points d'angle de l'image de soudure tridimensionnelle afin d'obtenir la matrice de relation de correspondance (S920).

**10.** Dispositif de détermination d'une région de détection de qualité de cordon de soudure, comprenant :

un module d'acquisition configuré pour acquérir une image de soudure bidimensionnelle et une image de soudure tridimensionnelle d'une pièce cible qui a été soudée ;
un module d'évaluation configuré pour réaliser une évaluation de fumée de soudage sur l'image de soudure bidimensionnelle afin d'obtenir un résultat d'évaluation de fumée de soudage ;
un module d'identification configuré pour réaliser un processus d'identification sur l'image de soudure bidimensionnelle selon le résultat d'évaluation de fumée de soudage afin d'obtenir une image de contour de cordon de soudure ;
un module d'étalonnage configuré pour réaliser un processus d'étalonnage sur l'image de soudure bidimensionnelle et l'image de soudure tridimensionnelle afin d'obtenir une matrice de relation de correspondance ;
un module de mise en correspondance configuré pour mettre en correspondance l'image de contour de cordon de soudure de l'image de soudure bidimensionnelle avec celle de l'image de soudure tridimensionnelle selon la matrice de relation de correspondance afin d'obtenir une image composée tridimensionnelle ;
un module d'ajustement configuré pour réaliser un processus d'identification sur l'image composée tridimensionnelle afin d'obtenir une ligne de référence cible de cordon de soudure ;
un module de comparaison configuré pour réaliser un processus de comparaison de décalage sur l'image de contour de cordon de soudure et la ligne de référence cible de cordon de soudure afin d'obtenir un résultat de comparaison de décalage ; et
un module de détermination configuré pour, en réponse au fait que le résultat de comparaison de décalage est conforme à une plage de seuils prédéfinie, déterminer que l'image de contour de cordon de soudure est la région de détection de qualité de cordon de soudure.

**11.** Ordinateur, comprenant une mémoire, un processeur et un programme informatique stocké sur la mémoire et exécutable sur le processeur, le programme informatique, lorsqu'il est exécuté par le processeur, mettant en oeuvre le procédé de détermination d'une région de détection de qualité de cordon de soudure selon l'une quelconque des revendications 1 à 9.

**12.** Support de stockage lisible par ordinateur, stockant une instruction exécutable par ordinateur, l'instruction exécutable par ordinateur étant utilisée pour exécuter le procédé de détermination d'une région de détection de qualité de cordon de soudure selon l'une quelconque des revendications 1 à 9.

FIG. 1

Acquire a two-dimensional welding image and
a three-dimensional welding image of
a target workpiece that has been welded

S100

Perform welding fume judgment on the
two-dimensional welding image to obtain
a welding fume judgment result

S200

Perform an identification process on the
two-dimensional welding image according to the
welding fume judgment result to obtain
a welding seam edge image

S300

Perform a calibration process on the two-dimensional
welding image and the three-dimensional welding
image to obtain a mapping relation matrix

S400

Map the welding seam edge image of the two-
dimensional welding image to the three-dimensional
welding image according to the mapping relation matrix
to obtain a three-dimensional composite image

S500

Perform an identification process on the
three-dimensional composite image
to obtain a fitting line

S600

Perform an offset comparison process on the welding
seam edge image and a welding seam target datum line
to obtain an offset comparison result

S700

Determine the welding seam edge image as a welding
seam quality detection region when the offset
comparison result is consistent with
a preset threshold range

S800

FIG. 2

Acquire a minimum enclosing graph of a welding seam region in the two-dimensional welding image by using an edge identification tool — S310

Judge whether welding fume exists in the two-dimensional welding image according to an edge line parameter of the minimum enclosing graph — S320

Determine the welding fume judgment result as the existence of the welding fume when the edge line parameter is greater than a threshold, or determine the welding fume judgment result as the non-existence of the welding fume when the edge line parameter is smaller than the threshold — S330

FIG. 3

P1          P2

FIG. 4

Perform a histogram equalization process on the two-dimensional welding image to obtain the two-dimensional welding image subjected to the equalization process $\quad$ S510

Perform a quantization process on the two-dimensional welding image subjected to the equalization process to obtain a welding fume region and the welding seam region $\quad$ S520

S530

Perform a searching process on the welding seam region through the edge identification tool to obtain the welding seam edge image

FIG. 5

P3      P4      P5

FIG. 6

Perform the identification process on the
three-dimensional composite image to obtain a first
region and a second region welded with the first region

— S710

Perform a fitting process according to the first region
and the second region to obtain the fitting line

— S720

FIG. 7

810 830 820

FIG. 8

Perform the calibration process on the two-dimensional welding image and the three-dimensional welding image to obtain a plurality of corner point coordinates of the two-dimensional welding image and a plurality of corner point coordinates of the three-dimensional welding image

S910

Perform a transformation matrix calculation process according to the plurality of corner point coordinates of the two-dimensional welding image and the plurality of corner point coordinates of the three-dimensional welding image to obtain the mapping relation matrix

S920

FIG. 9

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- CN 112258521 A
- WO 2021108885 A1
- EP 3883716 A1